## Europäisches Patentamt
## European Patent Office
## Office européen des brevets

(11) Veröffentlichungsnummer: **0 123 702**
**B1**

(12) # EUROPÄISCHE PATENTSCHRIFT

(45) Veröffentlichungstag der Patentschrift:
23.09.87

(51) Int. Cl.⁴: **B 23 K 20/16,** B 23 K 35/00 //
B23P15/04

(21) Anmeldenummer: **83104102.5**

(22) Anmeldetag: **27.04.83**

(54) **Verfahren zum Verbinden von metallischen Bauelementen.**

(43) Veröffentlichungstag der Anmeldung:
**07.11.84 Patentblatt 84/45**

(45) Bekanntmachung des Hinweises auf die Patenterteilung:
**23.09.87 Patentblatt 87/39**

(84) Benannte Vertragsstaaten:
**CH DE FR GB LI NL**

(56) Entgegenhaltungen:
**GB-A-2 081 155**
**US-A-3 678 570**
**US-A-3 753 794**
**US-A-4 089 456**
**US-A-4 152 816**
**US-A-4 250·229**

(73) Patentinhaber: **BBC Aktiengesellschaft Brown,
Boveri & Cie., Haselstrasse, CH- 5401 Baden (CH)**

(72) Erfinder: **Jahnke, Bernd, Dr., Adalbert- Seifriz-
Strasse 10, D-6903 Neckargemünd (DE)**

(74) Vertreter: **Kempe, Wolfgang, Dr., c/o BROWN,
BOVERI & CIE AG ZPT Postfach 351, D-6800
Mannheim 31 (DE)**

## Beschreibung

Die Erfindung bezieht sich auf ein Verfahren zum Verbinden von metallischen Bauelementen zu einem Bauteil gemäß dem Oberbegriff der Patentansprüche 1 und 2.

Solche Bauteile kommen vorzugsweise als Lauf- und Leitschaufeln sowie als Wärmestausegmente von Gasturbinen zur Anwendung.

Für die Fertigung dieser Bauteile werden vorzugsweise zwei oder mehrere metallische Bauelemente dauerhaft miteinander verbunden. Die Verbindung der metallischen Bauelemente erfolgt bis jetzt durch Hochtemperaturlöten oder mittels Diffusionslöten. Beim Hochtemperaturlöten wird ein Nickel- oder Kobaltbasislot verwendet. Wie aus W.A. Owczarski, Process and Metallurgical Factors in Jointing Superalloys and other High Temperature Materials, Agard LS-91 (1977) 3-1/3-32 bekannt ist, erfolgt das Diffusionslöten unter Bildung einer kurzzeitig flüssigen Zwischenschicht, die in Form von Pulver oder eine amorphen Folie zwischen die beiden zu verbindenden Bauelemente gebracht wird. Von Nachteil ist bei diesen Verfahren, daß insbesondere Bauelemente mit einer komplexen geometrischen Form nur unzureichend miteinander verbunden werden können. Ferner treten beim Hochtemperaturlöten und beim Diffusionslöten häufig Poren auf, die auf die Dichtungsänderungen während des Erstarrungsprozesses zurückzuführen sind, und sich nachteilig auf die mechanischen Eigenschaften des Bauteils auswirken.

Eine weitere Möglichkeit metallische Bauelemente zu einem Bauteil zu verbinden, bietet das Diffusionsschweißen. Hierbei werden unter Druck und erhöhten Temperaturen die beiden miteinander zu verbindenden Bauelemente über eine reine Festkörperdiffusion verschweißt. Nachteile des Diffusionsschweißen zeigen sich vor allem bei der Verbindung von gekrümmten Flächen, da hier sehr hohe Toleranzforderungen an die zu verbindenden Flächen gestellt werden, um einen vollständigen Kontakt zu gewährleisten. Der auszuübende Druck liegt häufig höher als 50 MPa und bewirkt damit Schwierigkeiten beim Verbinden von dünnwandigen Bauelementen. Zudem erfordert das Diffusionsschweißen eine sehr hohe Temperatur, so daß hierfür ein großer Energieaufwand erforderlich ist.

In der GB-A- 20 81 155 ist ein Verfahren beschrieben, mit dem ein Substrat mit einem Überzug bzw. eine Abdichtung versehen werden kann. Hierzu wird die Oberfläche des als Abdichtung dienenden Elementes mit einer Borschicht überzogen. Das Gleiche geschieht mit der Oberfläche des abzudichtenten Substrates. Anschließend werden das Bauelemente und das Substrat miteinander verbunden und für eine vorgebbare Zeit einer definierten Temperatur ausgesetzt. Die Temperatur wird dabei so gewählt, daß sich eine flüssige Zone zwischen dem Verkleidungselemente und dem Substrat bildet. Durch Anwendung eines isostatischen Drucks werden die beiden Elemente dauerhaft aneinandergefügt.

Aus der US-A- 3 678 570 ist ein Verfahren zum Diffusionsfügen bekannt, mit dem metallische Bauteile verbunden werden können. Für die Durchführung des Verfahrens wird eine dünne Zwischenschicht, bestehend aus Chrom, Kobalt, Molybdän, Bor und Nickel, zwischen den zu verbindenden Bauteilen angeordnet. Die zu verbindenden Bauteile werden unter Anwendung eines sehr schwachen Druckes, der gerade ausreicht, um die Bauteile zusammenzuhalten, unter Wärmeeinwirkung miteinander verbunden.

In der US-A- 4 089 456 ist eine Vorrichtung zur Verbindung von metallischen Bauteilen beschrieben. Die Vorrichtung, die insbesondere zum Diffusionsfügen geeignet ist, übt aufgrund unterschiedlicher thermischer Ausdehnungskoeffienten einen Druck auf die in ihr angeordneten Bauteile aus. Hierdurch kommt es zu einem guten Kontakt der zu verbindenden Flächen dieser Bauteile.

Der Erfindung liegt die Aufgabe zugrunde, ein Verfahren aufzuzeigen, mit dem Bauteile, insbesondere für Gasturbinen auf einfache Weise durch Verbinden von zwei oder mehreren metallischen Bauelementen beliebiger Form hergestellt werden können, wobei die anzuwendenden Drücke und Temperaturen niedriger als bei bekannten Schweißverfahren liegen sollen, die Drücke jedoch höher sein sollen als bei bekannten Lötverfahren.

Diese Aufgabe wird erfindungsgemäß durch die kennzeichnenden Merkmale des Patentanspruches 1 gelöst.

Eine weitere Lösung ist im kennzeichnenden Teil des Patentanspruches 2 offenbart.

Mit dem erfindungsgemäßen Verfahren können Bauteile für Gasturbinen auch durch Verbindung von dünnwandigen Bauelementen, die zudem eine komplexe geometrische Form aufweisen, hergestellt werden. Für die Herstellung solcher Bauteile werden vorzugsweise Bauelemente verwendet, die aus einer Legierung auf der Basis von Nickel oder Kobalt gefertigt sind. Das Verbinden der Bauelemente erfolgt im Vakuum. Erfindungsgemäß wird zwischen den miteinander zu verbindenden Flächen der Bauelemente eine Zwischenschicht angeordnet, die durch eine Lötfolie, die den Schmelzpunkt der die Bauelemente bildenden Legierung senkt, gebildet wird. Die Dicke der aufgebrachten Zwischenschicht beträgt 1 bis 50 μm. Vorzugsweise wird eine Zwischenschicht mit eine, Dicke zwischen 10 und 40 μm aufgetragen. Anschließend werden die Bauelemente und die Zwischenschicht oder die Zwischenschicht alleine auf eine Temperatur erwärmt, die über dem Schmelzpunkt der Zwischenschicht liegt. Vorzugsweise werden die Bauelemente und die Zwischenschicht auf eine Temperatur zwischen 1120 und 1230° C erwärmt. Ein hierfür besonders gut geeigneter Temperaturbereich liegt zwischen 1140 und 1200° C. Die Zwischenschicht wird so gewählt, daß ihr Schmelzpunkt in diesem Bereich oder etwas darunter liegt. Erfindungsgemäß werden nur solche Zwischenschichten verwendet, die einen niedrigeren Schmelzpunkt als die Bauelemente aufweisen. Vor der Erwärmung der Bauelemente und der Zwischenschicht oder im Anschluß daran werden die Bauelemente einem Druck von 1 bis 100 MPa vorzugsweise einem Druck zwischen 10 und 30 MPa ausgesetzt. Durch die Erwärmung der Bauelemente und der Zwischenschicht auf eine Temperatur, die über dem Schmelzpunkt der Zwischenschicht liegt, wird erreicht, daß diese schmilzt und den Fügebereich zwischen den zu verbindenden Bauelementen, insbesondere den Bereich zwischen den miteinander zu verbindenden Flächen dieser Bauelemente vollständig ausfüllt. Aufgrund des erhöhten Drucks werden alle Toleranzen optimal ausgeglichen. Die Verbindungstemperatur wird für einen vorgebbaren Zeitraum von 2 bis 6 Stunden aufrecht erhalten, um die gewünschte metallurgische Reaktion zwischen dem Lötmaterial und den Bauelementen zu erreichen. Ein isothermisches Erstarren des Lötmaterials bzw. der die Bauelemente bildenden Legierung wird dadurch erreicht, daß eine Anlösung des die Bauelemente bildenden Werkstoffes durch die Einwirkung der Temperatur und des Drucks erreicht wird. Der angewendete Druck verhindert eine unerwünschte Porenbildung und beeinflußt die Ausscheidungsbildung günstig. Hierdurch wird die Bildung einer größeren Anzahl von spröden Phasen unterbunden. Bei Anwendung einer Glühzeit von 2 bis 6 Stunden kann hiermit eine vollständig homogene porenfreie Fügezone erzielt werden. Mit dem erfindungsgemäßen Verfahren wird zwischen den Bauelementen eine Verbindung geschaffen, bei der im Bereich der Fügezone Werte für die Zugfestigkeit, die Streckgrenze und die Dehnung sowie die Zeitstandfestigkeit erreicht werden, die dem Grundwerkstoff der Bauelemente entsprechen.

Das erfindungsgemäße Verfahren ist besonders für die Verbindung von Bauelementen aus einer Legierung auf der Basis von Nickel vom Typ $\gamma$-$\gamma'$ geeignet. Besonders gut lassen sich mit dem erfindungsgemäßen Verfahren Bauelemente verbinden, die aus einer Legierung gefertigt sind, die 5 bis 24 % Chrom, 0 bis 11 % Molybdän, 0 bis 2 % Niob, 0 bis 7 % Tantal oder Niob, 0 bis 22 % Kobalt, 0 bis 6 % Titan, 0 bis 7 % Aluminium, 0,1 bis 0,5 % Kohlenstoff, 0,001 bis 0,2 % Beryllium, 0 bis 0,3 % Zirkonium, 0 bis 2 % Hafnium, 0 bis 6 % Eisen, 0 bis 12 % Wolfram bezogen auf das Gesamtgewicht der Legierung aufweisen. Eine besonders gute Verbindung zwischen den Bauelementen wird dadurch erreicht, daß der angewendete Druck von seinem Maximalwert ausgehend kontinuierlich bis zu seinem Minimalwert gesenkt wird. Ein sehr gutes Ergebnis wird jedoch auch dann erreicht, wenn mit dem Minmalwert des Drucks begonnen wird, und dieser dann auf seinen Maximalwert gesteigert wird.

Erfindungsgemäß kann ein Bauteil für eine Gasturbine auch dadurch hergestellt werden, daß auf die Flächen der miteinander zu verbindenden Bauelemente wenigstens eine Zwischenschicht in Form einer amorphen Lötfolie, einer Lötschicht oder eines Lötpulvers bzw. eines Pulvers, das den Schmelzpunkt des die Bauelemente bildenden Werkstoffe senkt, aufgetragen wird. Anschließend wird ein kurzzeitiger Lötprozess eingeleitet, der jedoch nur solange durchgeführt wird, daß die Zwischenschicht nicht vollständig isotherm erstarrt, die Lotnaht jedoch abgedichtet wird. Anschließend werden die so miteinander verbundenen Bauteile abgekühlt. Es schließt sich eine isostatische Nachverdichtung an, für die die Bauelemente nochmals erwärmt werden. Vorzugsweise wird mit einer Temperatur von 1120 bis 1160° C begonnen. Die Bauelemente werden dann bis etwa 1180 bzw. 1220° C erwärmt. Das Nachverdichten wird 2 bis 4 Stunden durchgeführt. Es hat den Vorteil, daß hierfür keine komplexen Druckwerkzeuge verwendet werden müssen, wie dies bei Anwendung des oben beschriebenen Verfahrens der Fall ist.

Das erfindungsgemäße Verfahren wird anhand von Zeichnungen erläutert.

Es zeigen:

Figur 1: Zwei miteinander zu verbindende metallische Bauelemente,

Figur 2: ein aus zwei metallischen Bauelementen gebildetes Bauteil für eine Gasturbine

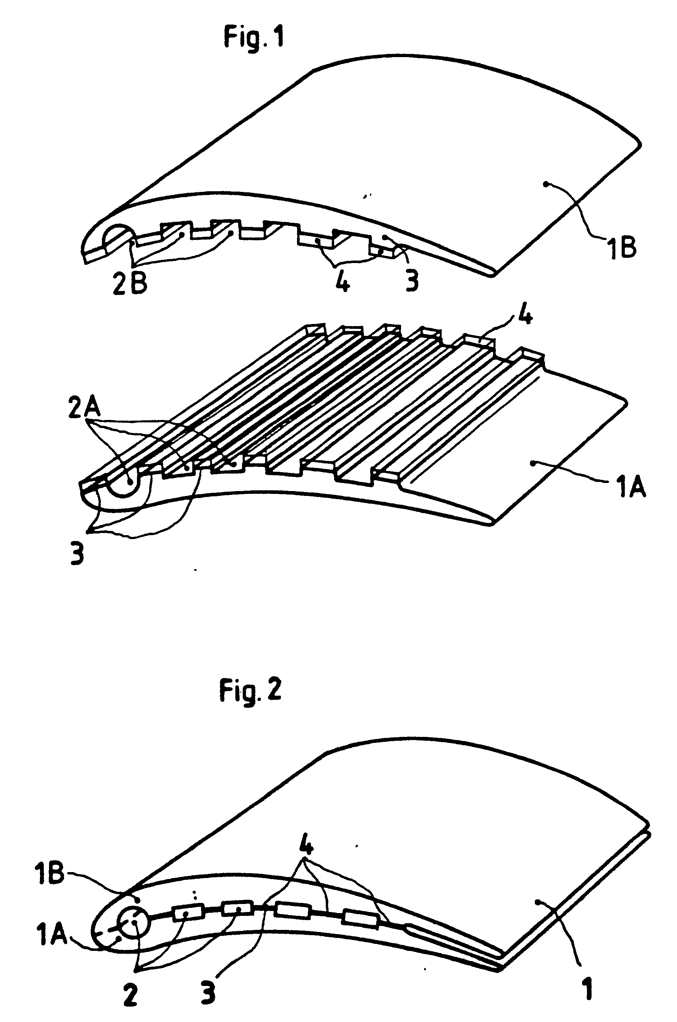

Die in Figur 1 dargestellten metallischen Bauelemente 1A und 1B entsprechen genau den beiden Hälften eines zu bildenden Bauteils 1 für eine Gasturbine. Die beiden Bauelemente 1A und 1B sind mit Ausnehmungen 2A bzw. 2B versehen, die zu ihren Längsachsen senkrecht verlaufen. Die beiden Bauelemente 1A und 1B sind bezüglich ihrer Ausnehmungen 2A und 2B spiegelsymmetrisch ausgebildet. Bei dem später durch das Verbinden der beiden Bauelemente hergestellten Bauteil, bilden, wie anhand von Figur 2 zu sehen ist, die Ausnehmungen 2A und 2B, die deckungsgleich zueinander angeordnet sind, Kühlkanäle 2. Wie anhand von Figur 1 zu sehen ist, wird auf den miteinander zu verbindenden Flächen 3 der beiden Bauelemente 1A und 1B eine Zwischenschicht 4 angeordnet. Die Zwischenschicht kann erfindungsgemäß aus einer amorphen Lötfolie einer Lötschicht oder einem Lötpulver bestehen. Bei dem hier dargestellten Ausführungsbeispiel wird die Zwischenschichten 4 durch eine Lötfolie gebildet. Die Zwischenschicht kann auch durch Pulver gebildet werden, das den Schmelzpunkt des die Bauelemente 1A und 1B bildenden Werkstoffes senkt. Vorzugsweise wird zur Bildung der Zwischenschichten 4 eine Nickel-Chrom-Bor-Lötfolie aus verwendet. Die verwendete Lötfolie wird so gewählt, daß ihr Schmelzpunkt unterhalb des Schmelzpunktes liegt, den der die Bauelemente 1A und 1B bildende Werkstoff aufweist. Bevorzugt wird für die Bildung der Zwischenschicht ein Lötwerkstoff gewählt, dessen Schmelzpunkt zwischen 1050 und 1230°C, vorzugsweise in einem Temperaturbereich zwischen 1120 und 1180°C liegt. Die Dicke der aufgetragenen Zwischenschicht 4 wird zwischen 1 und 50 μm gewählt. Die Dicke der hier verwendeten Zwischenschicht 4 beträgt 30 μm.

Nach dem Auftragen der Zwischenschicht 4 werden die beiden Bauelemente 1A und 1B deckungsgleich aufeinander gelegt. Anschließend werden sie in einem Ofen auf eine Temperatur von 1120 bis 1180°C erwärmt. Vor oder nach der Erwärmung der Bauelemente und der in der Fügezone angeordneten Zwischenschichten werden die Bauelemente der Einwirkung eines Druckes von 1 bis 10 MPa ausgesetzt. Die Verbindung der beiden Bauelemente erfolgt im Vakuum, der Druck sollte dabei kleiner als 10-3 MPa sein. Die Einwirkung der Temperatur und des Drucks auf die beiden Bauelemente wird vorzugsweise 2 bis 6 Stunden aufrecht erhalten. In dieser Zeit kommt es zur Bildung einer isothermischen Erstarrung des die Zwischenschichten bildenden Lotmaterials bzw. des die Bauelemente bildenden Werkstoffes. Die in dem dargestellten Ausführungsbeispiel miteinander zu verbindenden Bauelemente 1A und 1B bestehen vorzugsweise aus einer Legierung, die 5 bis 24 % Chrom, 0 bis 11 % Molybdän, 0 bis 2 % Niob, 0 bis 7 % Tantal und Niob, 0 bis 22 % Kobalt, 0 bis 6 % Titan, 0 bis 7 % Aluminium, 0,01 bis 0,5 % Kohlenstoff, 0,001 bis 0,2 % Beryllium, 0 bis 0,3 % Zirkonium, 0 bis 2 % Hafnium, 0 bis 6 % Eisen und 0 bis 12 % Wolfram bezogen auf das Gesamtgewicht der Legierung enthält. Es handelt sich hierbei um eine Legierung auf der Basis von Nickel vom Typ γ-γ'. Nach Beendigung der Glühzeit, insbesondere nach 2 bis 6 Stunden ist das aus den beiden Bauelementen 1A und 1B unter Einwirkung von Druck und Temperatur gebildete Bauteil 1 für eine Gasturbine fertiggestellt.

Weisen die Bauelemente 1A und 1B aus denen das Bauteil für die Gasturbine hergestellt werden soll komplexe geometrische Formen auf, so kann das Fertigungsverfahren etwas variiert werden. Hierfür wird zunächst auf die zu verbindenden Flächen der beiden Bauelemente 1A und 1B eine Lötfolie, eine Lötschicht oder ein Lötpulver aufgetragen. Es besteht auch hierbei die Möglichkeit ein Pulver auf die zu verbindenden Flächen 3 aufzutragen, welches den Schmelzpunkt des die Bauelemente 1A und 1B bildenden Werkstoffes senkt. Vorzugsweise werden auch bei der Durchführung dieses Verfahrens Bauelemente 1A und 1B verwendet, die aus einer Legierung gefertigt sind, welche die oben erwähnte Zusammensetzung aufweist. Die beiden Bauelemente 1A und 1B werden zusammengesetzt und kurze Zeit gelötet, und zwar nur so lange, daß die Zwischenschicht 4 nicht vollständig isotherm erstarrt, aber die Lotnaht abgedichtet wird. Anschließend wird das Bauteil 1, insbesondere die Fügezone und die beiden Bauelemente 1A und 1B abgekühlt. An diesen Abkühlvorgang schließt sich eine isostatische Nachverdichtung an, wofür das Bauteil 1 erwärmt wird. Die Erwärmung beginnt bei einer Temperatur von 1120 bis 1160°C und wird dann auf 1180 bis 1220°C gesteigert. Die isostatische Nachverdichtung wird 2 bis 4 Stunden lang durchgeführt. Dieses Verfahren weist den Vorteil auf, daß keine komplexen Druckwerkzeuge benötigt werden, wie sie in dem oben beschriebenen Verfahren für die Fertigung des Bauelementes 1 erforderlich sind. Hierdurch wird die Herstellung des Bauelementes 1 insbesondere dann vereinfacht, wenn die beiden Bauelemente 1A und 1B komplexe geometrische Formen aufweisen.

**Patentansprüche**

1. Verfahren zum Verbinden von metallischen Bauelementen (1A, 1B) zu einem Bauteil (1) durch Zwischenfügen einer Zwischenschicht (4) definierter Dicke, die zusammen mit den Bauelementen (1A, 1B) auf eine vorgebbare Temperatur erwärmt wird, wobei auf die Bauelemente (1A, 1B) ein definierter Druck ausgeübt wird und im Fügebereich ein isothermisches Erstarren der Zwischenschicht (4) und/oder des Legierungsmaterials der Bauelemente (1A, 1B) bewirkt wird, dadurch gekennzeichnet, daß zur Fertigung des Bauteils (1) Bauelemente (1A, 1B) aus einer Legierung auf der Basis von Kobalt oder Nickel vom Typ γ-γ' verwendet werden, zwischen denen als Zwischenschicht (4) eine Nickel-Chrom-Bor-Folie mit einer Dicke von 1 bis 50 μm angeordnet wird, die einen Schmelzpunkt zwischen 1220 und 1230°C aufweist und zusammen mit den Bauelementen (1A, 1B) auf eine Temperatur von 1120 bis 1230°C erwärmt wird, daß vor oder nach dieser Erwärmung auf die Bauelemente (1A,1B) ein Druck zwischen 10 bis 100 MPa ausgeübt wird, und daß die Temperatur und der Druck solange aufrecht erhalten werden, bis im Fügebereich das isothermische Erstarren der Zwischenschicht (4) und/oder des Legierungsmaterials der Bauelemente (1A, 1B) bewirkt wird.

2. Verfahren zum Verbinden von metallischen Bauelementen (1A, 1B) zu einem Bauteil (1), wobei zwischen den Bauelementen (1A, 1B) eine Zwischenschicht (4) definierter Dicke angeordnet ist, die zusammen mit den Bauelementen (1A, 1B) auf eine vorgebbare Temperatur erwärmt wird, dadurch gekennzeichnet, daß zur Fertigstellung des Bauteils (1) Bauelemente (1A, 1B) aus einer Legierung auf der Basis von Kobalt oder Nickel vom Typ γ-γ' verwendet werden zwischen denen eine Nickel-Chrom-Bor-Folie mit einer Dicke von 1-50 μm als Zwischenschicht (4) angeordnet wird, daß daraufhin im Fügebereich kurzzeitig wenigstens bis zum Erreichen einer Lotnahtabdichtung gelötet wird, und im Anschluß

daran die Bauelemente (1A,1B) und die Zwischenschicht (4) abgekühlt werden, und daß daraufhin bei einer Temperatur zwischen 1120 und 1220°C der Fügebereich isostatisch nachgedichtet wird.

3. Verfahren nach Anspruch 1 oder 2, dadurch gekennzeichnet, daß zur Fertigung des Bauteils (1) Bauelemente (1A, 1B) aus einer Legierung verwendet werden, die 5 bis 24 % Chrom, 0 bis 11 %, Molybdän, 0 bis 2 % Niob, 0 bis 7 % Tantal und Niob, 0 bis 22 % Kobalt, 0 bis 6 % Titan, 0 bis 7 % Aluminium, 0,01 bis 0,05 % Kohlenstoff, 0,01 bis 0,2 % Berryllium, 0 bis 0,3 % Zirkonium, 0 bis 2 % Hafnium, 0 bis 6 % Eisen und 0 bis 12 % Wolfram bezogen auf das Gesamtgewicht der Legierung enthält.

4. Verfahren nach einem der Ansprüche 1 bis 3, dadurch gekennzeichnet, daß der auf die Bauelemente (1A, 1B) ausgeübte Druck mit Hilfe von Druckwerkzeugen oder isostatisch erzeugt wird.

## Claims

1. Method for joining metallic structural members (1A, 1B) to form a component (1) by interposing an intermediate layer (4) of defined thickness which is heated together with the structural members (1A, 1B) to a specified temperature, a defined pressure being exerted on the structural elements (1A, 1B) and an isothermal solidification of the intermediate layer (4) and/or of the alloy material of the structural members (1A, 1B) being effected in the joint region, characterized in that structural members (1A, 1B) consisting of an alloy based on cobalt or nickel of the type γ - γ' are used to produce the component (1), between which structural members there is disposed, as intermediate layer (4), a nickel-chromium-boron film with a thickness of 1 to 50 μm which has a melting point between 1220 and 1230°C and is heated together with the structural members (1A, 1B) to a temperature of 1120 to 1230°C, in that a pressure between 10 to 100 MPa is exerted on the structural members (1A, 1B) before or after this heating, and in that the temperature and the pressure are maintained until the isothermal solidification of the intermediate layer (4) and/or the alloy material of the structural members (1A, 1B) is effected in the joint region.

2. Method for joining metallic structural members (1A, 1B) to form a component (1), there being disposed between the structural members (1A, 1B) an intermediate layer (4) of defined thickness which is heated together with the structural members (1A, 1B) to a specified temperature, characterized in that structural members (1A, 1B) consisting of an alloy based on cobalt or nickel of the type γ - γ' are used to produce the component (1), between which structural members a nickel-chromium-boron film with a thickness of 1-50 μm is disposed as intermediate layer (4), in that soldering is then carried out in the joint region for a short time at least until a solder-seam seal is achieved and subsequently thereto the structural members (1A, 1B) and the intermediate layer (4) are cooled, and in that the joint region is then post sealed isostatically at a temperature between 1120 and 1220°C.

3. Method according to claim 1 or 2, characterized in that structural elements (1A, 1B) consisting of an alloy are used to produce the component (1), which alloy contains 5 to 24 % chromium, 0 to 11 % molybdenum, 0 to 2 % niobium, 0 to 7 % tantalum and niobium, 0 to 22 % cobalt, 0 to 6 % titanium, 0 to 7 % aluminium, 0.01 to 0.05 % carbon, 0.01 to 0.2 % berrylium, 0 to 0.3 % zirconium, 0 to 2 % hafnium, 0 to 6 % iron and 0 to 12 % tungsten based on the total weight of the alloy.

4. Method according to one of the claims 1 to 3, characterized in that the pressure exerted on the structural members (1A, 1B) is produced by means of pressure tools or isostatically.

## Revendications

1. Procédé d'assemblage de pièces métalliques (1A, 1B) pour constituer un composant (1) en interposant une couche intermédiaire (4) d'épaisseur définie, qui conjointement avec les pièces (1A, 1B), est chauffée à une température prédeterminée, une pression définie étant exercée sur les pièces (1A, 1B) et une solidification isotherme de la couche intermédiaire (4) et/ou du matériau d'alliage des pièces (1A, 1B) étant provoquée dans la région du joint, caractérisé par le fait que pour réaliser le composant (1), on utilise des pièces (1A, 1B) en un alliage à base de cobalt ou nickel du type γ - γ' entre lesquelles on dispose, en tant que couche intermédiaire (4), une feuille de nickel-chrome-bore ayant une épaisseur de 1 à 50 μm et présentant un point de fusion compris entre 1220 et 1230°C, cette feuille étant chauffée, conjointement avec les pièces (1A, 1B), à une température de 1120 à 1230°C, par le fait qu'avant ou après ce chauffage on exerce sur les pièces (1A, 1B) une pression comprise entre 10 et 100 MPa, et par le fait que l'on maintient la température et la pression jusqu'à ce que la solidification isotherme de la couche intermédiaire (4) et/ou du matériau d'alliage des pièces (1A, 1B) soit réalisée dans la région du joint.

2. Procédé d'assemblage de pièces métalliques (1A, 1B) pour constituer un composant (1), une couche intermédiaire (4) d'épaisseur définie étant interposée entre les pièces (1A, 1B) et chauffée conjointement avec celles-ci à une température prédéterminée caractérisé par le fait que, pour réaliser le composant (1), on utilise des pièces (1A, 1B) en un alliage à base de cobalt ou nickel du type γ - γ' entre lesquelles on dispose, en tant que couche intermédiaire (4) une feuille de nickel-chrome-bore ayant une épaisseur de 1 à 50 µm, par le fait que l'on réalise ensuite brièvement, dans la région du joint, une soudure au moins jusqu'à l'obtention d'un joint soudé étanche, puis on refroidit les pièces (1A, 1B) et la couche intermédiaire (4), et par le fait que l'on densifie ensuite isostatiquement la région du joint sous une température comprise entre 1120 et 1220°C.

3. Procédé selon revendication 1 ou 2, caractérisé par le fait que, pour réaliser le composant (1), on utilise des pièces (1A, 1B) en un alliage comportant, en pourcentages rapportés au poids total de l'alliage: chrome 5 à 24 %, molybdène 0 à 11 %, niobium 0 à 2 %, tantale et niobium 0 à 7 %, cobalt 0 à 22 %, titane 0 à 6 %, aluminium 0 à 7 %, carbone 0,01 à 0,05 % béryllium 0,01 à 0,2 %, zirconium 0 à 0,3 %, hafnium 0 à 2 %, fer 0 à 6 %, et tungstène 0 à 12 %.

4. Procédé selon l'une quelconque des revendications 1 à 3, caractérisé par le fait que la pression exercée sur les pièces (1A, 1B) est produite à l'aide d'outils de pression ou isostatiquement.

Ó 123 702

Fig. 1

2B 4 3 1B

2A 3 1A

Fig. 2

1B 4 1A 2 3 1 1

1